# EUROPÄISCHE PATENTSCHRIFT

(11) **EP 0 541 014 B1**
(45) Veröffentlichungstag und Bekanntmachung des Hinweises auf die Patenterteilung: **06.09.1995**
(21) Anmeldenummer: 92118656.5
(22) Anmeldetag: 31.10.1992
(51) Int. Cl.: F16H 7/14

(54) **Antriebseinheit**
Drive unit
Unité de transmission

(30) Priorität: 07.11.1991 DE 4136643
(43) Veröffentlichungstag der Anmeldung: 12.05.1993
(73) Patentinhaber: Schröder, Karlheinz, D-63571 Gelnhausen (DE)
(72) Erfinder: Schröder, Karlheinz, D-63571 Gelnhausen (DE)
(74) Vertreter: Müller-Wolff, Thomas, Dipl.-Ing.

(56) Entgegenhaltungen:
- EP-A- 0 297 263
- BE-A- 879 595

## Beschreibung

Die Erfindung betrifft eine Antriebseinheit, bestehend aus motorseitiger Antriebswelle und Riementrieb mit Abtriebswelle.

Riementriebe der eingangs genannten Art sind in vielfaltiger Bauart, beispielsweise als offener Riementrieb oder gekreuzter Riementrieb aus LUEGER, Lexikon der Technik, Band 2, Seite 624, bekannt. Sie werden vorzugsweise zum Antrieb von Maschinen oder Aggregaten mit hoher Laufgeschwindigkeit verwendet, wobei die Antriebsenergie mittels eines Flachriemens oder Keilriemens übertragen wird. Um den Schlupf zwischen den Antriebsscheiben und den Laufriemen möglichst niedrig zu halten, muß der Riemen mit einer gewissen Vorspannung aufgelegt werden, wobei die Spannkraft mindestens gleich oder größer als das erforderliche Anlauf- bzw. Bremsmoment ist.

Aufgrund der erhöhten Belastung an den Aggregat- und Motorlagern bewirkt dies einen vorzeitigen Verschleiß, insbesondere bei Überlagerung von schwingender Belastung, wie sie bei Unwuchten, an- oder abtriebsseitigen Veränderungen oder bei beschleunigten Anfahr- bzw. Abbremsmomenten auftreten können.

Durch den Verschleiß sind häufige aufwendige Reparaturen an den Lagern der Aggregate und Antriebsmotoren sowie Nachrüstmaßnahmen am Riementrieb erforderlich. Da hierzu die Antriebsanordnungen, bestehend aus Motor, Antriebseinheit und angetriebenen Aggregaten, oft vollständig demontiert werden müssen, ist anschließend beim Wiederaufbau der Anlage eine erneute Ausrichtung und Feineinstellung der fluchtenden Wellen sowie des Riemenspanndruckes notwendig. Insgesamt ist dadurch die Lebensdauer und die Verfügbarkeit der bekannten Antriebsanordnungen wesentlich beeinträchtigt. Bei profilierten Riementrieben tritt ein Verschleiß der Profilflanken an den Riemenscheiben als zusätzliche Verschleißkomponente auf, die einen Austausch früher als bisher erforderlich macht.

Aufgabe der vorliegenden Erfindung ist es, bei Antriebsanordnungen der eingangs genannten Art die beschriebenen Nachteile zu vermeiden und die Wellen und Riemenscheiben so anzuordnen, daß die auftretenden Lagerkräfte an den Aggregaten und Antriebsmotoren auch bei hohen Betriebsdrehzahlen minimiert werden und die Reparaturdauer bei Nachrüstungen oder Austauscharbeiten wesentlich herabgesetzt wird.

Erfindungsgemäß wird diese Aufgabe durch die in den Patentansprüchen angegebenen Merkmale gelöst. Es hat sich gezeigt, daß sich bei einer Anordnung der Riemenscheiben zwischen zwei Lagerschildern eine raumsparende Anordnung ergibt, die eine antriebstypische Krafteinleitung gewährleistet, wobei die Lagerkräfte direkt in die Struktur der Lagerschilder übergeleitet werden.

Die Lagerschilder sind auf einer Traverse verschiebbar angeordnet, wobei vorzugsweise die eine Seite fest und die andere mit den gegenüberliegenden Lagerschildern über Langlöcher einstellbar verbunden ist.

Vorzugsweise sind die Riemenscheiben zumindest antriebsseitig mit einer spielausgleichenden Kupplung verbunden. Dadurch können bauseitig auftretende Fluchtfehler ausgeglichen werden.

Nach einer besonderen Ausführungsform der Erfindung ist vorgesehen, daß zwischen den an- und abtriebsseitigen Lagerschildern mindestens ein Paßstück zur Einstellung der Riemenspannkraft eingefügt ist. Bei Ersatz des Riemens kann dieses Paßstück ausgetauscht werden, so daß immer die geeignete Riemenspannkraft zwischen den Riemenscheiben eingestellt und der Achsabstand unveränderlich fixiert ist.

Es ist vorteilhaft, wenn zur Sicherung der Lage des Riementriebs in Achsrichtung eine Stütze mit einem, die Antriebseinheit aufnehmenden Bauwerk verbunden ist. Damit wird ein seitliches Abdriften der montierten Antriebseinheit unterbunden, wenn aufgrund der antriebseitigen flexibel angeordneten Kupplung ein indifferenter Zustand eintritt.

Um ein möglichst schnelles Auswechseln der erfindungsgemäßen Antriebseinheit zu ermöglichen, ist in einer besonders vorteilhaften Ausbildung der Erfindung vorgesehen, daß die An- und Abtriebswellen mittels Klemmbuchsen form- und reibschlüssig mit den auf Hohlwellen gelagerten Riemenscheiben verbunden sind.

Im folgenden wird die Erfindung anhand mehrerer Ausführungsbeispiele näher erläutert.
- Figur 1 zeigt: eine Ansicht der erfindungsgemäßen Antriebseinheit.
- Figur 2 zeigt: eine Ansicht entlang A-A der erfindungsgemäßen Antriebseinheit gemäß Figur 1.

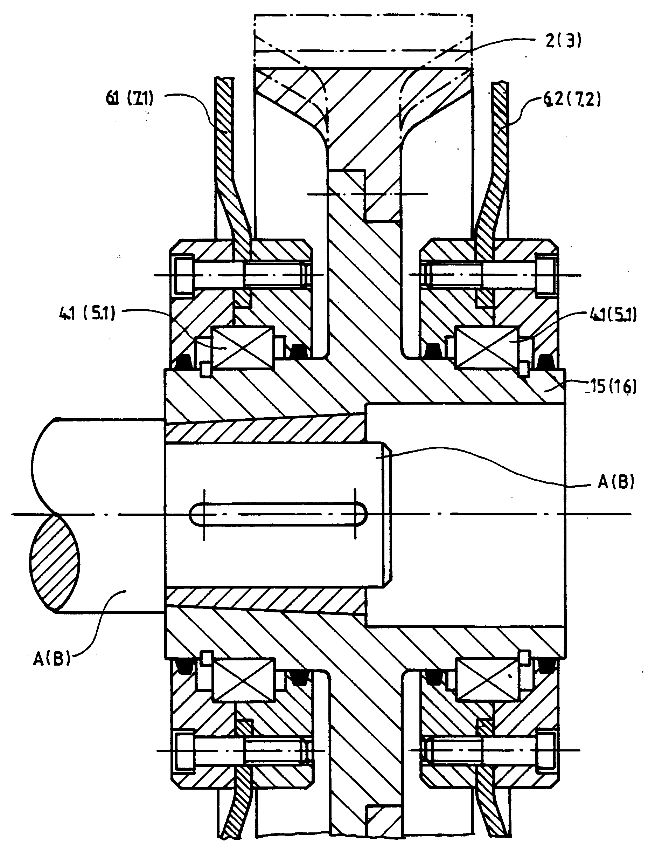

- Figur 3 zeigt: einen Querschnitt der Lagerung und Anbindung der Antriebseinheit.

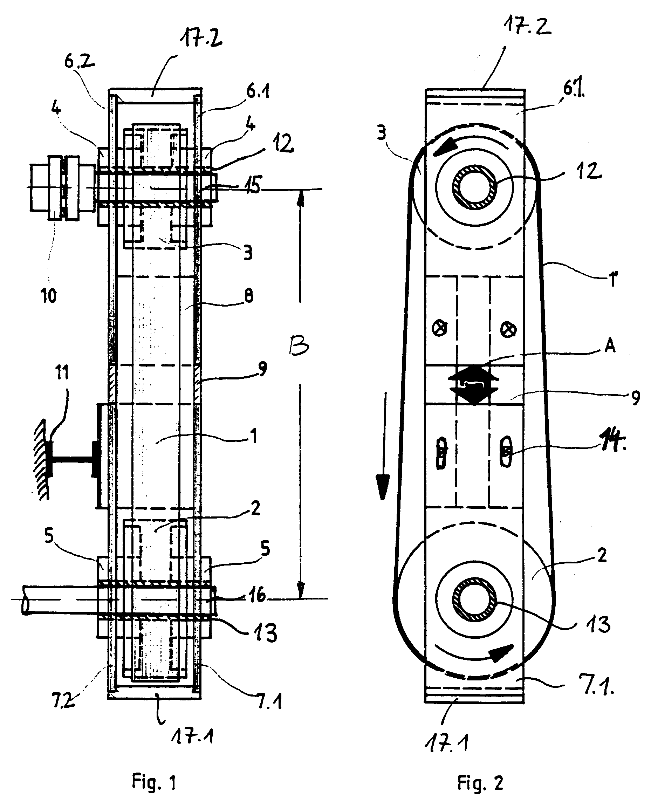

In Figur 1 ist der zwischen zwei Riemenscheiben 2,3 gespannte Treibriemen in Draufsicht dargestellt. Die Riemenscheiben 2,3 sitzen auf Lagern 4,5, die wiederum über Hohlwellen 15, 16 mit An- bzw. Abtriebswellen A,B verbunden sind.

Die Lager 4,5 werden zwischen Lagerschildhälften 6.1, 6.2 bzw. 7.1, 7.2 gehalten, wobei der Abstand der Lagerschilde über Distanzstücke 17.1 und 17.2 fixiert ist. Zwischen den Lagerschildhälften 6.1, 6.2 und 7.1, 7.2 befindet sich je ein Paßstück 9.1, 9.2,mit dem die Spannung des Treibriemens 1 eingestellt wird. Ferner ist zwischen den Lagerschildhälften 6.1, 6.2 und 7.1, 7.2 eine Traverse 8 angeordnet, deren Befestigung aus Figur 2 deutlich wird.

Bei der Montage werden zunächst die Hohlwellen l5, 16 mit den Riemenscheiben 2,3, den Lagern 4,5 und den Lagerschildhälften 6.1, 6.2 und 7.1, 7.2 montiert, auf die Traverse 8 aufgeschoben und mit Schrauben 13, 12 befestigt. Zwischen den Lagerschildhälften 6.1, 6.2 und 7.1, 7.2 wird in Position "A" hydraulisch der Hochleistungsriemen 1 gespannt und mittels dem Paßstück 9.1, 9.2 fixiert.

Aus Figur 2 ist ersichtlich, daß an der Antriebsseite die Lagerschildhälften 6.1, 6.2 mit der Traverse 8 fest verschraubt sind, während an der Abtriebsseite die Lagerschildhälften 7.1, 7.2 über Langlöcher 14 mit der Traverse 8 einstellbar verbunden sind. Sobald diese Festlegung erfolgt ist, kann die Antriebseinheit ihre Funktion aufnehmen. Bei Reparatur- und Wartungsarbeiten kann die gesamte Antriebseinheit mit den Hohlwellen 15, 16 von den Antriebs- bzw. Abtriebswellen A,B abgezogen werden, wobei eine schnelle De- und Remontage erfolgt.

Zur Sicherung der Antriebseinheit in vertikaler und horizontaler Richtung ist eine Stütze 11 mit der Traverse einerseits und mit einem für die Antriebseinheit aufnehmenden Bauwerk andererseits verbunden. Diese Stütze ist nur erforderlich falls eine spielausgleichende Kupplung 10 verwendet wird.

Die erfindungsgemäße Antriebseinheit eignet sich in insbesondere vorteilhafter Weise für den Antrieb von Radial- oder Axiallüfter, Mühlen und Brecherwerke, Rotations- und Kolbenverdichter. Werden die Aggregate im Dauer- bzw. Wechselbetrieb bzw. pulsierend und schwellender Belastung betrieben, so ergeben sich erhebliche Drehmomentbelastungen, die von der Antriebseinheit aufgenommen werden und dadurch die teueren Aggregate und Antriebsmotore schonen.

In den genannten Anwendungsfällen ist es von eminenter Bedeutung, daß die Antriebs- bzw. Abtriebswellen des Riementriebs mit den entsprechenden Wellen von Motor und Aggregaten fluchten. Die Einstellarbeiten werden erfindungsgemäß dadurch verkürzt, daß der Riementrieb als geschlossene Baugruppe mit vorgewähltem Achsabstand und einmaliger Ausrichtung von den erwähnten Wellen gelöst bzw. wieder mit ihnen verbunden werden kann, ohne eine aufwendige Ausrichtung vornehmen zu müssen.

Zur Erleichterung der Montage ist vorgesehen, daß die Wellen 15, 16 als Hohlwellen ausgebildet sind und mittels eines Spannelementes die Antriebs- bzw. Abtriebswellen mit dem Antriebsmotor und dem Aggregat reibschlüssig verbunden werden können. Durch diese Art der Befestigung ist es möglich, daß die gesamte Baugruppe des Riemenantriebs selbstzentrierend auf die Antriebs- bzw. Abtriebswellen aufgesteckt werden kann.

Dies gilt auch bei an verschiedenen Plätzen untergebrachten Antriebseinheiten, sofern sie nur vom gleichen Antriebstyp (Baugröße) sind. In diesen Fällen sind die Durchmesserbereiche und der Achsabstand zwischen den Antriebs- und Abtriebseinheiten gleich.

Ein besonderer Vorteil des erfindungsgemäßen Riementriebs ist es, daß die Kompaktbauweise der Antriebseinheit die sonst üblichen antriebstypischen Schwingungen kompensiert. Dies beruht darauf, daß die erfindungsgemäße Lagerung der Riemenscheiben vollkommen symmetrisch und zentrisch zur Riemenscheibe-Rotationsachse erfolgt, so daß die auftretenden Lagerkräfte allseitig aufgenommen werden. Beispielsweise sind die die Hohlwellen 15 bzw. 16 tragenden Wälzlager 4,5 von den Lagerschildern 6, 7 mittig unterstützt, wobei eine geringfügige exzentrische Lagerung toleriert wird.

Dadurch werden Schwingungen infolge von Unwucht oder Verspannungen des Riementriebs vermieden bzw. in tolerierbaren Grenzen gehalten.

## Patentansprüche

1. Antriebseinheit bestehend aus einer motorseitigen Antriebswelle und einem Riementrieb mit einer Abtriebswelle, bei der der Riementrieb als vormontierte, geschlossene Baugruppe aus zwei symmetrisch zwischen zwei Lagerschildern (6 und 7) gelagerten Riemenscheiben (2, 3) besteht, die mit der Antriebs- bzw. Abtriebswelle (15, 16) lösbar verbunden sind, wobei jedes Lagerschild (6, 7) zwischen den Riemenscheiben (2, 3) in jeweils zwei Lagerschildhälften (6.1, 6.2 bzw. 7.1, 7.2) geteilt ist und wobei die Lagerschilder (6, 7) mit einer Traverse (8) überbrückt werden und zur Einstellung des Riemenspanndrucks auf mindestens einer Seite an der Traverse (8) verschiebbar und fixierbar angeordnet sind.

2. Antriebseinheit nach Anspruch 1, dadurch gekennzeichnet, **daß** die Riemenscheiben (2,3) zumindest antriebsseitig mit einer spiel- bzw. fluchtfehlerausgleichenden Kupplung (10) verbunden sind.

3. Antriebseinheit nach Anspruch 2, dadurch gekennzeichnet, **daß** zur Sicherung der Lage des Riementriebs in vertikaler und horizontaler Richtung eine Stütze (11) mit der Antriebseinheit und dem aufnehmenden Bauwerk lösbar verbunden ist.

4. Antriebseinheit nach Anspruch 1, dadurch gekennzeichnet, **daß** die Riemenscheiben (2,3) jeweils gesonderte Naben besitzen, auf denen Wälzlager für die Lagerschildhälften (6.1, 6.2 oder 7.1, 7.2) angebracht sind.

5. Antriebseinheit nach Anspruch 1, dadurch gekennzeichnet, **daß** die Traverse (8) mit den antriebs- bzw. abtriebsseitigen Lagerschildhälften (6.1, 6.2 bzw. 7.1, 7.2) fest und mit den abtriebs- bzw. antriebsseitigen Lagerschildhälften (7.1, 7.2 bzw. 6.1, 62) über Langlöcher (14) einstellbar verbunden ist.

6. Antriebseinheit nach einem der vorhergehenden Ansprüche, dadurch gekennzeichnet, **daß** zwischen den antriebs- und abtriebsseitigen Lagerschildhälften (6.1, 6.2 und 7.1, 7.2) mindestens ein Paßstück (9) zur Einstellung der Riemenspannung eingefügt ist.

7. Antriebseinheit nach Anspruch 1, dadurch gekennzeichnet, **daß** die Antriebs- bzw. Abtriebswellen (15, 16) ausschließlich mit der vormontierten, geschlossenen Baugruppe verbunden sind.

## Claims

1. A drive unit consisting of an input shaft at the motor end and a belt drive with an output shaft, wherein the belt drive constitutes a pre-assembled, closed assembly consisting of two pulleys (2, 3) supported symmetrically between two bearing plates (6 and 7) and removably connected to the input shaft and output shaft (15, 16), with each bearing plate (6, 7) between the pulleys (2, 3) being divided into two bearing plate halves (6.1, 6.2 and 7.1, 7.2 respectively) and with the bearing plates (6, 7) being bridged by a transverse bar (8) and, for the purpose of setting the belt tensioning pressure, being movably and fixably arranged on at least one side of the transverse bar (8).

2. A drive unit according to claim 1,
characterised in
that at least at the drive end, the pulleys (2, 3) are connected to a coupling (10) which compensates for clearance and alignment errors.

3. A drive unit according to claim 2,
characterised in
that for the purpose of securing the position of the belt drive in the vertical and horizontal directions, a support (11) is removably connected to the drive unit and to the receiving structure.

4. A drive unit according to claim 1,
characterised in
that the pulleys (2, 3) each comprise separate hubs to which there are attached rolling contact bearings for the bearing plate halves (6.1, 6.2 or 7.1, 7.2).

5. A drive unit according to claim 1,
characterised in
that the transverse bar (8) is firmly connected to the bearing plate halves (6.1, 6.2 and 7.1, 7.2 respectively) at the input and output ends and settably connected by means of oblong holes (14) to the bearing plate halves (7.1, 7.2 and 6.1, 6.2 respectively) at the output and input ends.

6. A drive unit according to any one of the preceding claims,
characterised in
that between the bearing plate halves (6.1, 6.2 and 7.1, 7.2) at the input and output ends, there is inserted at least one adapting piece (9) for setting the belt tension.

7. A drive unit according to claim 1,
characterised in
that the input and output shafts (15, 16) are only connected to the pre-assembled, closed assembly.

## Revendications

1. Groupe moteur composé d'un arbre menant situé du côté du moteur et d'une transmission à courroie avec un arbre mené, dont la transmission à courroie en tant que sous-groupe fermé préalablement assemblé est constitué par deux poulies (2, 3) montées de façon symétrique entre deux flasques (6 et 7), qui sont reliées de façon amovible respectivement à l'arbre menant et à l'arbre mené (15, 16), sachant que chaque flasque est divisé en deux demi-flasques (respectivement 6.1, 6.2 et 7.1, 7.2) entre les poulies (2, 3) et que les flasques (6, 7) sont reliés par une traverse (8) et disposés sur au moins un côté de la traverse (8) de manière à pouvoir être déplacés et fixés pour régler la tension de la courroie.

2. Groupe moteur selon la revendication 1, caractérisé en ce que les poulies (2, 3) sont reliées, au moins du côté menant, à un accouplement (10) compensant les jeux et les erreurs d'alignement.

3. Groupe moteur selon la revendication 2, caractérisé en ce que, pour assurer la position de la courroie dans les directions verticale et horizontale, un support (11) est relié de façon amovible au groupe moteur et au bâtiment qui renferme ce dernier.

4. Groupe moteur selon la revendication 1, caractérisé en ce que les poulies (2, 3) comportent chacune un moyeu distinct sur lesquels sont fixés des paliers à roulement pour les demi-flasques (6.1, 6.2 ou 7.1, 7.2).

5. Groupe moteur selon la revendication 1, caractérisé en ce que la traverse (8) est reliée fixement aux demi-flasques situés respectivement du côté menant et du côté mené (respectivement 6.1, 6.2 et 7.1, 7.2) et est reliée aux demi-flasques situés respectivement du côté mené et du côté menant (respectivement 7.1, 7.2 et 6.1, 6.2) de manière à pouvoir être réglée par le biais de trous oblongs (14).

6. Groupe moteur selon l'une des revendications précédentes, caractérisé en ce que, entre les demi-flasques situés du côté menant et du côté mené (6.1, 6.2 et 7.1, 7.2), est insérée au moins une pièce d'ajustage (9) pour régler la tension de la courroie.

7. Groupe moteur selon la revendication 1, caractérisé en ce que les arbres menant et mené (respectivement 15, 16) sont uniquement reliés au sous-groupe fermé préalablement assemblé.
